# EUROPÄISCHE PATENTSCHRIFT

(11) **EP 0 543 144 B1**
(45) Veröffentlichungstag und Bekanntmachung des Hinweises auf die Patenterteilung: **03.05.1995**
(21) Anmeldenummer: 92117587.3
(22) Anmeldetag: 15.10.1992
(51) Int. Cl.: H02G 15/04

(54) **Kabelendverschluss**
Cable end closure
Fermeture d'extrémité de câble

(30) Priorität: 22.11.1991 DE 4138407
(43) Veröffentlichungstag der Anmeldung: 26.05.1993
(73) Patentinhaber: THYSSEN POLYMER GMBH, 81671 München (DE)
(72) Erfinder: Bauer, Peter, W-8441 Konzell (DE); Helf, Walter, W-8440 Straubing (DE)

(56) Entgegenhaltungen:
- EP-A- 0 392 089
- EP-A- 0 398 210
- DE-U- 6 750 438
- DE-U- 9 011 333
- GB-A- 198 307
- SOVIET PATENTS ABSTRACTS Section EI, Week B10, 23. April 1979 DerwentPublications Ltd., London, GB; Class R, AN C1432B

## Beschreibung

Die Erfindung betrifft einen Kabelendverschluß gemäß dem Oberbegriff des Anspruchs 1. Ein Kabelendverschluß dieser Art ist aus der europäischen Anmeldung EP-A- 0529475, die unter Art. 54(3)(EPÜ) fällt, bekannt. Auch andere Arten von Kabelendverschlüssen sind an sich bekannt. Dabei werden u.a. schrumpffähige Kunststoffkappen auf das Kabelende gesteckt und mittels eines in der Kappe befindlichen Schmelzklebers, der erhitzt wird, auf das Kabelende geschrumpft oder, wie mit der DE-OS 39 11 688 vorgeschlagen, eine das Kabelende übergreifende Kappe und einer Buchse vorgesehen, die über eine Kupplungseinrichtung mit dem offenen Ende derart zusammengeschlossen ist, daß ein zwischen Kappe und Buchse eingesetzter und das Kabelende umschließender Dichtungsring den Kappeninnenraum, in den das Kabelende hineinragt, dicht verschließt.

Beide Arten von Kabelendverschlüssen sind mit gewissen Nachteilen behaftet, insbesondere was deren Handhabung und Wirtschaftlichkeit betrifft. So bedingen schrumpffähige Kunststoffkappen erheblichen Aufwand auf der Baustelle, wie Reinigungsvorgänge, Erhitzen des Schmelzklebers usw. Die Vorrichtung der DE-OS 39 11 688 dagegen ist mehrteilig ausgebildet und erfordert ebenfalls erhebliche Montagearbeit auf der Baustelle, außerdem sind derartige Kabelendverschlüsse stets nur für bestimmte Außendurchmesser der Kabelenden geeignet. Es müssen also regelmäßig Kabelendverschlüsse mit verschiedenen Innendurchmessern vorhanden sein.

Hier setzt die Erfindung ein. Die Erfindung, wie sie in dem unabhängigen Anspruch beschrieben ist, löst die Aufgabe, einen einfachen, auf Baustellen leicht zu handhabenden Kabelendverschluß zu besitzen, der keinerlei Hilfsmittel bedarf und für mehrere Kabeldurchmesser einsetzbar ist.

Die mit dem erfindungsgemäß ausgebildeten Kabelendverschluß erzielbaren Vorteile sind insbesondere darin zu sehen, daß der Kabelendverschhluß einstückig ausgebildet ist, auf einfache Weise, ohne Hilfsmittel, mit nur wenigen Umdrehungen auf das Kabelende aufgeschraubt wird und auf mehrere Kabeldurchmesser passt. Ein weiterer Vorteil ist darin zu sehen, daß auch ovale und sonstwie deformierte Kabel sowie schlecht gereinigte Kabel absolut feuchtigkeits- und druckdicht verschlossen werden können. Vorteilhafterweise ist der Kabelendverschluß aus Kunststoff gefertigt und beliebig oft wiederverwendbar. Besondere Ausführungsarten der Erfindung sind in den abhängigen Ansprüchen offenbart. Die Erfindung ist nachstehend anhand eines in den Abbildungen dargestellten Ausführungsbeispielses näher erläutert.

Es zeigt:

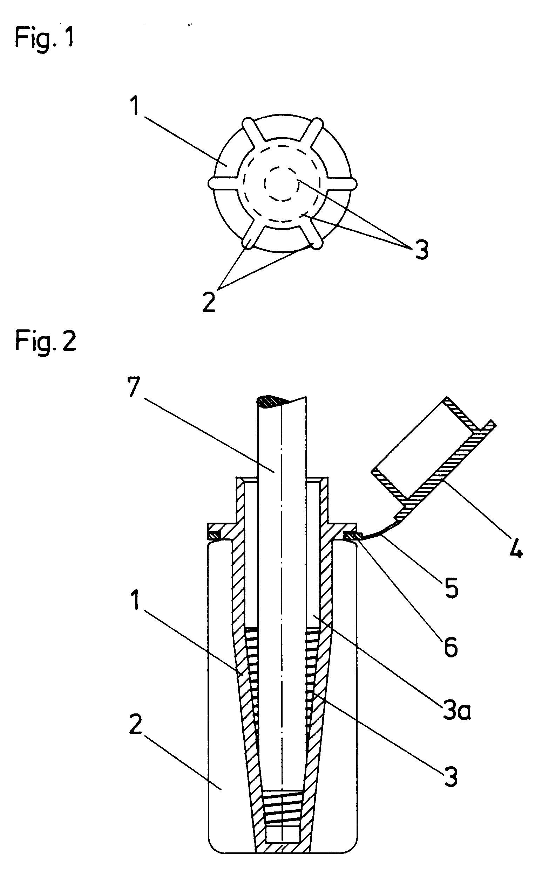

Fig. 1 eine Draufsicht auf den Kabelendverschluß und
Fig. 2 einen Schnitt durch die Figur 1.

Der Kabelendverschluß besteht aus einer Hülse 1, die außen mit mehreren Handgriffen, vorzugsweise angeformten Rippen 2 versehen ist. Die Innenwand der Hülse 1 ist unterhalb eines zylindrischen Abschnittes 3a, der der Führung des Kabelendes 7 dient, konisch ausgebildet und mit einem ebensolchen Gewinde 3 versehen. Dieses Gewinde weist eine relativ große Steigung und eine geringe Gewindetiefe auf. Eine Steigung von etwa 2 mm und eine Gewindetiefe von ca. 0,3 mm mit einer Schräge von 50 haben sich als geeignet erwiesen. Die Rippen 2 dienen lediglich der einfachen Handhabung beim Aufschrauben der Hülse auf das Kabelende 7.

Hülse 1 und Schutzkappe 4 bestehen vorzugsweise aus dem gleichen Kunststoff.

Während der Lagerung und des Transportes kann die Hülse 1 zum Schutz vor grobem Schmutz mit einer Schutzkappe 4 verschlossen werden, die über eine Schlaufe 5 oder dergl. mittels eines Ringes 6 oberhalb der Rippen 2 am Körper der Hülse 1 befestigt werden. Diese Schutzkappe 4 kann beispielsweise zusammen mit der Hülse 1 einstückig im Spritzgußverfahren erzeugt sein oder als gesondertes Teil, das mit dem Ring 6 drehbar gelagert ist. Ersteres hat den Vorteil einfacher Herstellung und späteren Recyclings, da einteilig aus einem Rohstoff bestehend, die zweite Möglichkeit erleichtert das Aufsetzen und Abnehmen der Schutzkappe 4 durch Drehen derselben.

Zum dichten Verschließen eines Kabelendes 7 wird die Hülse 1 mit ihrem zylindrischen Abschnitt 3a zunächst über das Kabelende 7 bis zum Anschlag gestülpt und anschließend durch Drehen der Rippe 2, unter leichtem Andrücken, auf das Kabelende 7 geschraubt. Dabei arbeitet sich das konisch ausgebildete Gewinde 3 in den Kabelmantel ein und verschließt das Kabelende 7 dicht.

Der erfindungsgemäß ausgebildete Kabelendverschluß kann selbstverständlich auch anderweitig mit Vorteil eingesetzt werden, ebenso wie andere, geeignete Materialien zu dessen Herstellung eingesetzt werden können.

## Patentansprüche

1. Kabelendverschluß zum dichten Verschluß des Endes eines Kabels (7) mittels einer darüber gestülpten einseitig geschlossenen Kappe, die an ihrer Außenseite mit mehreren Längsrippen (2) versehen ist, **gekennzeichnet** durch eine Hülse (1), mit einem zum offenen Ende hin zylindrischen Führungsabschnitt (3a), für das Kabelende und einen sich daran anschließenden konischen Abschnitt mit einem sich in den zylindrischen Mantel des Kabelendes (7) einschneidenden konischen Innengewinde (3).

2. Kabelendverschluß nach Anspruch 1, **dadurch gekennzeichnet**, daß das Innengewinde (3) der Hülse (1) eine große Steigung bei geringer Tiefe aufweist.

3. Kabelendverschluß nach Anspruch 1 und einen der folgenden, **dadurch gekennzeichnet**, daß die Hülse (1) mit einer Schutzkappe (4) verschließbar ist.

4. Kabelendverschluß nach Anspruch 1 und einen der folgenden, **dadurch gekennzeichnet**, daß die Hülse (1) und die Schutzkappe (4) mit der Schlaufe (5) einstückig im Urformprozeß aus Kunststoff gefertigt sind.

## Claims

1. Cable end closure for tightly closing the end of a cable (7) by means of a unilaterally closed cap slipped over said end, said cap being provided with several lengthwise ribs (2) on its outside, **characterized** by a sleeve (1) with a guiding section (3a) which is cylindrical towards the open end, serving for the cable end and a taper section adjacent thereto having a conical internal thread (3) cutting into the cylindrical jacket of said cable end (7).

2. Cable end closure according to claim 1, **characterized in that** said internal thread (3) of said sleeve (1) has a large lead with a small depth.

3. Cable end closure according to claim 1 and to one of the following claims, **characterized in that** said sleeve (1) can be closed with a protective cap (4).

4. Cable end closure according to claim 1 and to one of the following claims, **characterized in that** said sleeve (1) and said protective cap (4) with the loop (5) is fabricated from plastic material in a single piece by an original forming process.

## Revendications

1. Boîte d'extrémité de câble pour la fermeture étanche des extrémités d'un câble (7) au moyen d'un couvercle fermé d'un côté et recouvrant celui-ci, muni sur sa face extérieure de plusieurs cannelures longitudinales (2), caractérisées par une douille (1) portant une section de guidage cylindrique orientée vers le bout ouvert (3a) pour l'extrémité de câble et une section conique qui lui succède, avec un filet femelle conique (3) se taraudant dans la gaine cylindrique de l'extrémité de câble (7).

2. Boîte d'extrémité de câble selon la revendication 1, caractérisée en ce que le filet femelle (3) de la douille (1) présente un grand pas pour une faible profondeur.

3. Boîte d'extrémité de câble selon la revendication 1 et l'une des suivantes, caractérisée en ce que la douille (1) est susceptible d'être refermée à l'aide d'un couvercle de protection (4).

4. Boîte d'extrémité de câble selon la revendication 1 et l'une des suivantes, caractérisée en ce que la douille (1) et le couvercle de protection (4) avec la languette (5) sont faits d'une pièce suivant le procédé de façonnage initial en matière plastique.
